(19) Europäisches Patentamt
European Patent Office
Office européen des brevets

(11) Publication number: **0 270 634 B1**

# EUROPEAN PATENT SPECIFICATION

(45) Date of publication of patent specification :
09.10.91 Bulletin 91/41

(51) Int. Cl.⁵ : **G06K 7/10**

(21) Application number : **87903995.6**

(22) Date of filing : **15.06.87**

(86) International application number :
**PCT/US87/01389**

(87) International publication number :
**WO 88/00376 14.01.88 Gazette 88/02**

(54) SYSTEM FOR SCANNING CODED INDICIA.

(30) Priority : **26.06.86 US 878748**

(43) Date of publication of application :
**15.06.88 Bulletin 88/24**

(45) Publication of the grant of the patent :
**09.10.91 Bulletin 91/41**

(84) Designated Contracting States :
**DE FR GB**

(56) References cited :
**EP-A- 0 123 336**
**DE-A- 2 329 041**
**FR-A- 2 478 849**

(56) References cited :
**US-A- 3 701 098**
**"Digital Picture Processing" by A. Rosenfeld
and A. C. Kak, Academic Press, 1976; pages
108/109**

(73) Proprietor : **NCR CORPORATION**
**World Headquarters**
**Dayton, Ohio 45479 (US)**

(72) Inventor : **MEYERS, Thomas, Jeffrey**
**66446 Greenbrier Drive**
**St. Clairsville, OH 43950 (US)**

(74) Representative : **Robinson, Robert George**
**International Patent Department NCR Limited**
**206 Marylebone Road**
**London NW1 6LY (GB)**

**Description**

This invention relates to systems of the kind for scanning coded indicia, including light source means adapted to illuminate said coded indicia, light receiving means adapted to receive light reflected from said coded indicia and to provide electrical signals representing the reflected light, signal processing means adapted to convert said electrical signals to binary data signals representing said coded indicia, and utilization means adapted to utilize said binary data signals.

The invention has a particular application to point-of-sale operations, wherein bar-coded labels on merchandise items are scanned at a check-out counter.

Background Art

In present-day merchandising point-of-sale operations, data pertaining to the merchandise item purchased is obtained by reading data encoded indicia such as a bar code printed on the merchandise item. In order to standardize the bar codes used in various point-of-sale readout systems, the grocery industry has adopted a Universal Product Code (UPC) which is in the form of a bar code. Various scanning systems have been constructed to read this bar code, including optical reader systems normally located within the check-out counter in which the portion of the merchandise item containing the bar code is moved across a window, constituting the scanning area of the counter, which movement is a part of the check-out process just prior to loading the item in a bag or the like.

Scanning systems presently available utilize a laser beam and a rotating mirror for generating a scan pattern used in reading the bar code. An example of this type of scanning system may be found in U.S. Patent No. 3,995,166. Limitations of this type of scanning apparatus include tight mechanical requirements due to the high speed rotation of the mirror, which requirements limit the operating efficiency of such scanning apparatuses, and the safety requirements associated with the use of laser beams. In addition, this type of scanning apparatus by necessity is large in size and weight and high in cost.

A system of the kind specified is known from U.S. Patent No. 4,335,302. The known system uses a non-coherent light source to illuminate a code label on a merchandise item moved over a window. Located directly beneath the window is a lens which projects an image of the label into a slit formed in an opaque surface. A second lens projects the image in the slit, focusing it onto a linear array of photosensitive diodes, which are scanned using a shift register. The system operates in two modes, dependent on the orientation of the code label with respect to the slit. Signal information from the photosensitive diodes is provided to a code reading circuit when bars on the coded label are substantially perpendicular to the linear array. When the bars are substantially parallel to the slit, a photodetector provides the code reading circuit with pulse signals when images of successive bars pass over the photodetector.

From US-A-3 701 098, there is known a system for scanning coded indicia wherein an image of a data field is projected by an imaging system on to a rotating read head which is provided with photoelectric read elements. The imaging system is automatically adjusted so as to position the projected image precisely at a desired location on the read head. The read elements on the read head are connected via coupling means, illustrated as slip ring contacts or the like, to output lines which connect to decoding and registration means external to the rotating head.

Disclosure of the Invention

It is an object of the present invention to provide a system of the kind specified which can operate without the use of a laser as a light source and which is compact in size.

Therefore, according to the present invention, there is provided a system for scanning coded indicia, including light source means adapted to illuminate said coded indicia, light receiving means adapted to receive light reflected from said coded indicia and to provide electrical signals representing the reflected light, signal processing means adapted to convert said electrical signals to binary data signals representing said coded indicia, and staionary utilization means adapted to utilize said binary data signals, wherein said light receiving means are mounted on a rotatable support means and wherein signal coupling means are provided adapted to transfer signals derived from the received reflected light from said rotatable support means to said stationary utilization means when said rotatable support means is rotating, characterized in that said signal processing means are mounted on said rotatable support means, and in that said signal coupling means includes: a plurality of first transducer devices coupled to said signal processing means and mounted on said rotatable support means, the number of first transducer devices depending on the number of binary data bits in the coded indicia being scanned; and a second transducer device mounted adjacent said rotatable support means and coupled to said stationary utilization means, whereby. in operation, said binary data signals are provided by said plurality of first transducer devices, received by said second transducer device and thereby transferred to said stationary utilization means.

## Brief Description of the Drawings

Embodiments of the present invention will now be described by way of example with reference to the accompanying drawings, in which:

Fig. 1 is a schematic representation of a bar code scanning system showing one arrangement of the scanning apparatus of the present invention;

Fig. 2 is a schematic representation of a bar code scanning system showing a second arrangement of the scanning apparatus of the present invention;

Fig. 3 is a schematic representation of an oblique view of the rotating disc member which supports the array of charge-coupled devices;

Fig. 4 is a schematic representation of a partial side view of the rotating member showing the stationary pick-up member;

Fig. 5 is a schematic representation of a top view of the rotating member showing the location of the array of charge-coupled devices and the light emitting diodes; and

Fig. 6 is a block diagram of the signal processing system of the present invention.

## Best Mode for Carrying Out the Invention

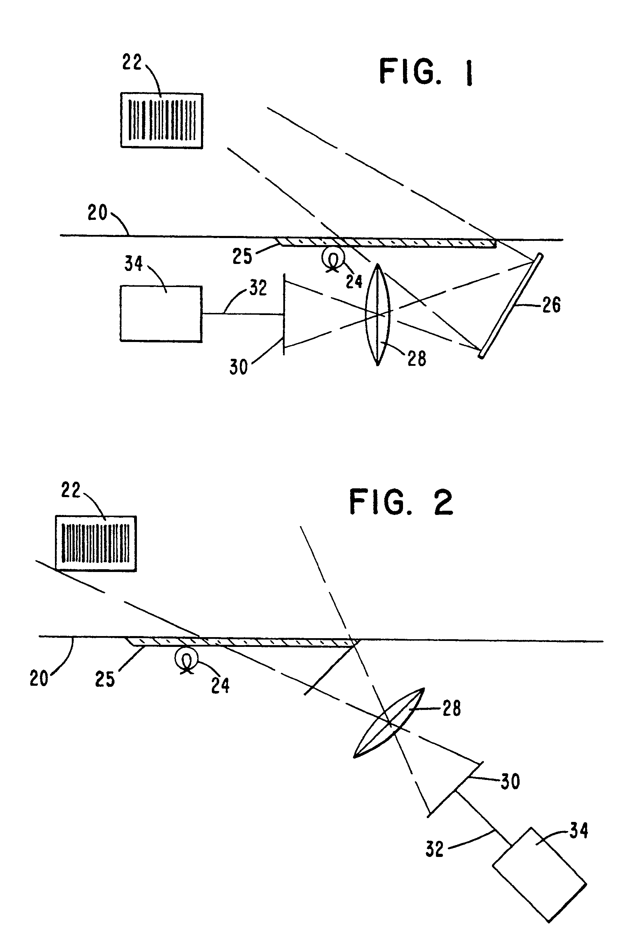

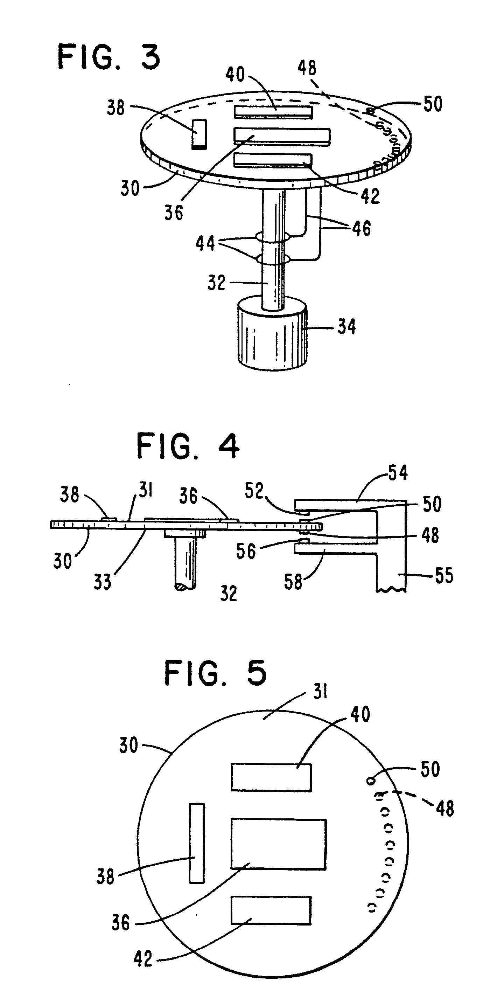

Referring now to Fig. 1, there is shown a schematic representation of a bar code scanning apparatus of the present invention which includes a supporting surface 20 such as the top surface of a check-out counter over which is moved a purchased merchandise item on which is located a bar code label 22. As the merchandise item moves along the surface 20, light beams from a light source 24 located adjacent a window 25 located in the surface 20 will illuminate the label and be reflected back through the window to a mirror 26. The light beams will be reflected from the mirror 26 through a focusing lens 28 to a rotating disc or support member 30 which is positioned in the focal plane of the lens 28. The support member 30 has an upper surface 31 and a lower surface 33 (see Fig. 4) and is connected to a motor 34 by a drive shaft 32 which rotates the support member 30. As will be described more fully hereinafter, a linear array 36 of charge-coupled elements mounted on the upper surface 31 of the support member 30 will store electrical signals representing the image of the bar code label in response to receiving the light beams from the lens 28. These signals are then transferred from the array 36 to processing means for processing the signals in a manner to be described more fully hereinafter. It will be seen that this arrangement allows the scanning apparatus to be mounted within a very compact area of the check-out counter. Fig. 2 of the drawings shows the scanning apparatus mounted where the available room requires a more vertical orientation of the scanning apparatus.

Referring now to Figs. 3 and 5, there are shown views of the rotating disc member 30 which may be composed of a thermoplastic material or other type of rigid structure and which supports the array 36 of charge-coupled elements, such as a Fairchild CCD 133 device, which is commercially available from the Fairchild Camera Co. of 3440 Hillview Avenue, Pala Alto, CA, 94304. Rotation of the array 36 allows the array to sense various locations of the bar code label. Also mounted on the disc member 30 are a number of IC chips 38-42 inclusive, comprising signal processing circuits for processing the signals stored by the array 36. A pair of slip rings 44 located on the drive shaft 34 provide power from a power source (not shown) over lines 46 to the array 36 and the IC chips 38-42 inclusive.

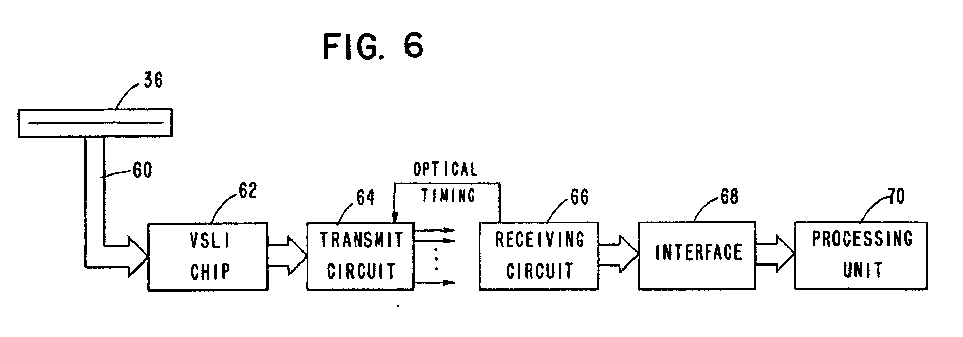

Mounted along the edge of the disc member 30 and extending from the lower surface 33 of the member 30 are a number of light-emitting diodes 48 while extending from the upper surface 31 is a photodiode 50. The diode 50 coacts with a light-emitting diode 52 (Fig. 4) mounted on the upper arm portion 54 of a stationary support member 55 which in turn is mounted adjacent the rotating disc member 30. The diodes 50 and 52 provide timing signals to the IC chips 38-42 inclusive indicating the position of the disc member 30. A photodiode 56 mounted on a lower arm portion 58 of the support member 55 co-acts with the diodes 48 to provide binary signals representing the bar code data outputted by the IC chips 38-42 inclusive and the diodes 48. The number of diodes 48 required for each installation depends on the number of binary data bits in the data being sensed by the array 36. The diodes 48 and 50 are connected to the IC chips 38-42 inclusive by conductors (not shown) embedded in the disc member 30. The light-emitting diode 52 is connected to a power source (not shown) while the photodiode 56 is connected to a processing unit 70 (Fig. 6) in a manner to be described hereinafter.

Referring now to Fig. 6, there is shown a block diagram of the signal processing system in which the signals representing an image of the coded bars on the label 22 (Fig. 1) are transmitted from the array 36 over the bus 60 located on the rotating disc member 30 to the VSLI chips 62 which include the chips 38-42 inclusive (Figs. 3 and 5). The chips 38-42 inclusive control the reading of the array and convert electrical signals outputted by the array 36 to binary signals which are transmitted to a transmit circuit 64 including the diodes 48 (Figs. 3 and 5). The binary signals in the form of optical signals are transmitted through the diodes 48 and 56 to a receiving circuit 66 which may, if so desired, be located some distance away from the checkout counter and the scanning apparatus. As previously described, the diodes 50 and 52 (Figs. 4 and 5) provide timing signals for clocking the output of the signals transmitted through the diodes 48 and 56.

The binary signals outputted by the receiving circuit 66 are transmitted through an interface 68 to the central processing unit 70 where the data is decoded and used to locate the price of the merchandise item purchased in a storage area such as a look-up table after which the price of the item is transmitted to a data terminal device (not shown) where it is displayed and printed in a manner that is well-known in the art.

It will be seen from the foregoing description that there is provided a scanning apparatus which can be mounted in a compact area of the check-out counter while allowing the data generated to be transmitted to a remote processing device.

**Claims**

1. A system for scanning coded indicia (22), including light source means (24) adapted to illuminate said coded indicia (22), light receiving means (36) adapted to receive light reflected from said coded indicia (22) and to provide electrical signals representing the reflected light, signal processing means (38-42) adapted to convert said electrical signals to binary data signals representing said coded indicia (22), and stationary utilization means (70) adapted to utilize said binary data signals, wherein said light receiving means (36) are mounted on a rotatable support means (30) and wherein signal coupling means (48,50) are provided adapted to transfer signals derived from the received reflected light from said rotatable support means (30) to said stationary utilization means (70) when said rotatable support means (30) is rotating, characterized in that said signal processing means (38-42) are mounted on said rotatable support means (30), and in that said signal coupling means includes: a plurality of first transducer devices (48) coupled to said signal processing means (38-42) and mounted on said rotatable support means (30), the number of first transducer devices (48) depending on the number of binary data bits in the coded indicia being scanned; and a second transducer device (56) mounted adjacent said rotatable support means (30) and coupled to said stationary utilization means (70), whereby, in operation, said binary data signals are provided by said plurality of first transducer devices (48), received by said second transducer device (56) and thereby transferred to said stationary utilization means (70).

2. A system according to claim 1, characterized in that said rotatable support means includes a disc member (30) having first and second surfaces (31,33) and in that said plurality of first transducer devices (48) are mounted along the edge of said second surface (33).

3. A system according to claim 2, characterized in that said signal coupling means includes a stationary support member (55) having an arm (58) extending parallel to said second surface (33) of said disc member (30) and having said second transducer device (56) mounted thereon.

4. A system according to claim 3, characterized in that said first surface (31) of said disc member (30) has mounted thereon a third transducer device (50) adapted to cooperate with a fourth transducer device (52) mounted on said stationary support member (55), whereby in operation, during rotation of said disc member (30), said fourth transducer device (52) causes said third transducer device (50) to provide timing signals which are applied to said signal processing means (38-42).

5. A system according to claim 4, characterized in that said stationary support member (55) has a further arm (54) extending parallel to said first surface (3l) and having said third transducer device (52) mounted thereon.

6. A system according to claim 5, characterized in that said plurality of first transducer devices (48) and said fourth transducer device (52) are light-emitting devices and said second and third transducer devices (56, 50) are light-sensitive devices.

7. A system according to claim 1, characterized by a lens member (28) adapted to focus the light reflected from said coded indicia (22) onto said light receiving means (36).

8. A system according to claim 1, characterized in that said light receiving means (36) includes a linear array of charge-coupled elements.

9. A check-out system including a check-out counter having a supporting surface (20) provided with a transparent portion (25) across which a merchandise item having coded indicia provided thereon may be moved, characterized by a system according to claim 1 for scanning said coded indicia.

**Patentansprüche**

1. System zum Abtasten von kodierten Markierungen (22), mit einer Lichtquellenvorrichtung (24), die geeignet ist, die kodierten Markierungen (22) zu beleuchten, einer Lichtempfangsvorrichtung (36), die geeignet ist, von den kodierten Markierungen (22) reflektiertes Licht zu empfangen und das reflektierte Licht darstellende elektrische Signale abzugeben, Signalverarbeitungsvorrichtungen (38-42), die geeignet sind, die elektrischen Signale in die kodierten Markierungen (22) darstellende binäre Datensignale umzuwandeln, und einer stationären Verwendungsvorrichtung (70), die geeignet ist, die binären Datensignale zu verwenden, wobei die Lichtempfangsvorrichtung (36) an einer rotierbaren Halterungsvorrichtung (30) angebracht ist und wobei Signalkopplungsvorrichtungen (48,50) vorgesehen sind, die geeignet sind, von dem empfangenen reflektierten Licht abgeleitete Signale von der rotierbaren Halterungsvorrichtung (30) zu der stationären Verwendungsvorrichtung (70) zu übertragen, wenn die rotierbare Halterungsvorrichtung (30) rotiert, dadurch gekennzeichnet, daß die Signalverarbeitungsvorrichtungen (38-42) auf der rotierbaren Halterungsvorrichtung (30) angebracht sind und daß die Signalkopplungsvorrichtungen aufweisen: eine Vielzahl von ersten Wandlervorrichtungen (48), die mit den Signalverarbeitungsvorrichtungen (38-42) gekoppelt und auf der rotierbaren Halterungsvorrichtung (30) angebracht sind, wobei die Anzahl erster Wandlervorrichtungen (48) abhängt von der Anzahl von binären Datenbits in den unter Abtastung befindlichen kodierten Markierungen; und eine zweite Wandlervorrichtung (56), die benachbart zu der rotierbaren Halterungsvorrichtung (30) angebracht und mit der stationären Verwendungsvorrichtung (70) gekoppelt ist, so daß im Betrieb die binären Datensignale durch die Vielzahl von ersten Wandlervorrichtungen (48) abgegeben, von der zweiten Wandlervorrichtung (56) empfangen und von dieser zu der stationären Verwendungsvorrichtung (70) übertragen werden.

2. System nach Anspruch 1, dadurch gekennzeichnet, daß die rotierbare Halterungsvorrichtung ein Scheibenelement (30) mit einer ersten und zweiten Fläche (31,33) aufweist, und daß die Vielzahl von ersten Wandlervorrichtungen (48) längs der Kante der zweiten Fläche (33) angebracht ist.

3. System nach Anspruch 2, dadurch gekennzeichnet, daß die Signalkupplungsvorrichtung ein stationäres Abstützelement (55) aufweist, das einen sich parallel zu der zweiten Fläche (33) des Scheibenelements (30) erstreckenden Arm (58) aufweist, an dem die zweite Wandlervorrichtung (56) angebracht ist.

4. System nach Anspruch 3, dadurch gekennzeichnet, daß die erste Fläche (31) des Scheibenelements (30) eine dritte Wandlervorrichtung (50) trägt, die geeignet ist, mit einer vierten Wandlervorrichtung (52) zusammenzuarbeiten, die auf dem stationären Halteelement (55) angebracht ist, so daß im Betrieb während der Rotation des Scheibenelements (30) die vierte Wandlervorrichtung (52) bewirkt, daß die dritte Wandlervorrichtung (50) Zeitgabesignale abgibt, die an die Signalverarbeitungsvorrichtungen (38-42) angelegt werden.

5. System nach Anspruch 4, dadurch gekennzeichnet, daß das stationäre Halteelement (55) einen weiteren sich parallel zu der ersten Fläche (31) erstreckenden Arm (54) aufweist, an dem die dritte Wandlervorrichtung (52) angebracht ist.

6. System nach Anspruch 5, dadurch gekennzeichnet, daß die Vielzahl von ersten Wandlervorrichtungen (48) und die vierte Wandlervorrichtung (52) Licht emittierende Vorrichtungen sind und die zweite und dritte Wandlervorrichtung (56, 50) lichtempfindliche Vorrichtungen sind.

7. System nach Anspruch 1, gekennzeichnet durch ein Linsenelement (28), das geeignet ist, das von den kodierten Markierungen (22) reflektierte Licht auf die Lichtempfangsvorrichtung (36) zu fokussieren.

8. System nach Anspruch 1, dadurch gekennzeichnet, daß die Lichtempfangsvorrichtung (36) eine lineare Anordnung von ladungsgekoppelten Elementen aufweist.

9. Abrechnungssystem mit einem Abrechnungsstand, der eine Auflagefläche (22) aufweist, die mit einem durchlässigen Abschnitt (25) versehen ist, über den ein Warenartikel bewegt werden kann, der mit kodierten Markierungen versehen ist, gekennzeichnet durch ein System nach Anspruch 1 zur Abtastung der kodierten Markierungen.

**Revendications**

1. Système de balayage de signes codés (22), comprenant une source de lumière (24) conçue pour éclairer lesdits signes codés (22), un moyen récepteur de lumière (36) conçu pour recevoir la lumière réfléchie par lesdits signes codés (22) et pour produire des signaux électriques représentant la lumière réfléchie, des moyens de traitement de signaux (38-42) conçus pour convertir lesdits signaux électriques en signaux de données binaires représentant lesdits signes codés (22), et des moyens d'utilisation fixes (70) conçus pour utiliser lesdits signaux de données binaires, dans lequel ledit moyen récepteur de lumière (36) est monté sur un moyen de support rotatif (30) et dans lequel des moyens de couplage de signaux (48, 50) sont prévus et conçus pour transférer des signaux dérivés de la lumière réfléchie reçue, dudit moyen de support rotatif (30) vers lesdits moyens fixes d'utilisation (70) lorsque ledit moyen de support rotatif (30) tourne, caractérisé en ce que lesdits moyens de traitement de signaux (38-42) sont montés sur ledit moyen de support rotatif (30), et en ce que lesdits moyens de couplage de signaux comprennent : plusieurs premiers dispositifs transducteurs (48) couplés auxdits moyens de traitement de signaux (38-42) et montés sur ledit moyen de support rotatif (30), le nombre de premiers dispositifs transducteurs (48) dépendant du nombre de bits de données binaires dans les signes codés balayés ; et un deuxième dispositif transducteur (56) monté à proximité immédiate dudit moyen de support rotatif (30) et couplé auxdits moyens fixes (70) d'utilisation, de manière qu'en fonctionnement, lesdits signaux de données binaires soient produits par lesdits premiers dispositifs transducteurs (48), reçus par ledit deuxième dispositif transducteur (56) et ainsi transférés auxdits moyens fixes d'utilisation (70).

2. Système selon la revendication 1, caractérisé en ce que ledit moyen de support rotatif comprend un élément à disque (30) ayant des première et seconde surfaces (31, 33), et en ce que lesdits premiers dispositifs transducteurs (48) sont montés le long du bord de ladite seconde surface (33).

3. Système selon la revendication 2, caractérisé en ce que lesdits moyens de couplage de signaux comprennent un élément de support fixe (55) ayant un bras (58) s'étendant parallèlement à ladite seconde surface (33) dudit disque (30) et sur lequel est monté ledit deuxième dispositif transducteur (56).

4. Système selon la revendication 3, caractérisé en ce que ladite première surface (31) dudit disque (30) porte un troisième dispositif transducteur (50) conçu pour coopérer avec un quatrième dispositif transducteur (52) monté sur ledit élément fixe de support (55) de manière que, en fonctionnement, pendant une rotation dudit disque (30), ledit quatrième dispositif transducteur (52) amène ledit troisième dispositif transducteur (50) à produire des signaux de synchronisation qui sont appliqués auxdits moyens de traitement de signaux (38-42).

5. Système selon la revendication 4, caractérisé en ce que ledit élément de support fixe (55) comporte un autre bras (54) s'étendant parallèlement à ladite première surface (31) et sur lequel est monté ledit troisième dispositif transducteur (52).

6. Système selon la revendication 5, caractérisé en ce que lesdits premiers dispositifs transducteurs (48) et ledit quatrième dispositif transducteur (52) sont des dispositifs émetteurs de lumière et lesdits deuxième et troisième dispositifs transducteurs (56, 50) sont des dispositifs sensibles à la lumière.

7. Système selon la revendication 1, caractérisé par une lentille (28) conçue pour focaliser la lumière réfléchie par lesdits signes codés (22) sur ledit moyen récepteur de lumière (36).

8. Système selon la revendication 1, caractérisé en ce que ledit moyen récepteur de lumière (36) comprend une rangée linéaire d'éléments à couplage de charge.

9. Système de contrôle comprenant une caisse de sortie présentant une surface de support (20) munie d'une partie transparente (25) sur laquelle un article de marchandise portant des signes codés peut être déplacé, caractérisé par un système selon la revendication 1 pour balayer lesdits signes codés.

FIG. I

FIG. 2

# FIG. 3

# FIG. 4

# FIG. 5

# FIG. 6

EP 0 270 634 B1